# EUROPÄISCHE PATENTSCHRIFT

(11) **EP 0 852 002 B1**
(45) Veröffentlichungstag und Bekanntmachung des Hinweises auf die Patenterteilung: **04.07.2001**
(21) Anmeldenummer: 96929962.7
(22) Anmeldetag: 18.09.1996
(51) Int. Cl.: G01J 3/52, A45D 44/00

(54) **VERFAHREN UND VORRICHTUNG ZUR ERMITTLUNG DES FARBTYPS EINES PROBANDEN**
METHOD AND ARRANGEMENT FOR DETERMINING THE COLOUR-TYPE OF A TEST SUBJECT
PROCEDE ET SYSTEME PERMETTANT DE DETERMINER LE TYPE DE COULEUR D'UNE PERSONNE SE PRETANT A DES TESTS

(30) Priorität: 20.09.1995 AT 50795 U
(43) Veröffentlichungstag der Anmeldung: 08.07.1998
(73) Patentinhaber: Theuerman, Krista, 8700 Leoben (AT); Schollenbauer, Helmut, 8700 Leoben (AT)
(72) Erfinder: Theuerman, Krista, 8700 Leoben (AT); Schollenbauer, Helmut, 8700 Leoben (AT)
(74) Vertreter: Cunow, Gerda
(86) Internationale Anmeldenummer: AT9600165
(87) Internationale Veröffentlichungsnummer: WO9711339

(56) Entgegenhaltungen:
- WO-A-95/03727
- FR-A- 2 546 624
- US-A- 4 258 478
- US-A- 4 681 546
- US-A- 5 311 293

## Beschreibung

Die vorliegende Erfindung bezieht sich auf ein verfahren zur Ermittlung des Farbtyps eines Probanden, wobei auf der Basis einer Mischfarbe anhand der Menge der darin enthaltenen Anteile von Grundfarben eine Auswahl vorgenommen und der Farbtyp des Probanden ermittelt wird, sowie auf eine Vorrichtung zur Ermittlung des Farbtyps eines Probanden zur Durchführung eines derartigen Verfahrens.

Es ist seit längerer Zeit allgemein bekannt, daß es einen Zusammenhang zwischen dem natürlichen Hautkolorit eines Menschen und den Farben gibt, zu welchen sich der Betreffende hingezogen fühlt bzw. welche ein entsprechend angenehmes Empfinden beim Betreffenden bewirken. Da das natürliche Farbempfinden bei den Menschen jedoch unterschiedlich stark ausgeprägt ist, wofür beispielsweise eine Vielzahl von Umwelteinflüssen verantwortlich sein können, tritt es jedoch immer häufiger auf, daß dieses an sich natürliche Farbempfinden nicht ausreichend zur Geltung kommt und somit eine Auswahl von Farben, beispielsweise für Haare, Accessoires oder Kleidung, erfolgt, welche für das Aussehen des Betroffenen, insbesondere im Zusammenhang mit seiner Hautfarbe bzw. -tönung im allgemeinen als nachteilig bzw. nicht günstig erachtet wird. Verantwortlich für das unterschiedliche Aussehen der Haut eines Menschen ist hiebei der sogenannte Sukzessivkontrast, wobei dieses Kontrastempfinden des Auges bewirkt, daß auf der Haut im allgemeinen die Gegenfarbe beispielsweise der Haare oder der Kleidung, d.h. allgemein der die Haut umgebenden Farbe, stärker gesehen wird. Es ist weiters allgemein bekannt, daß die unterschiedlichen Hauttypen im wesentlichen durch den Anteil von Hämoglobin oder Karotin geprägt werden, wodurch sich entsprechend unterschiedliche Hauttypen ergeben, welche beispielsweise als Warmtyp oder als Kalttyp bezeichnet werden, je nach dem, ob der Anteil an Karotin bzw. der Gelbanteil oder der Anteil an Hämoglobin bzw. der Blauanteil jeweils überwiegt.

Im Zusammenhang mit der Bestimmung des Hauttyps sind bereits unterschiedliche Verfahren und Methoden bekannt, welche in einem bedeutenden Ausmaß beispielsweise in der Körper-, Gesichts- oder auch in der Haarkosmetikindustrie Verwendung finden. Bei einem bekannten Verfahren wird beispielsweise durch Verwendung von Gold- und Silberfarben bzw. Schattierungen versucht, die entsprechenden Pigment- bzw. Farbstoffanteile der Haut festzustellen, um auf dieser Basis Empfehlungen beispielsweise für zu verwendende Make-ups sowie eine Haarfarbe abzugeben. Weitere bekannte Verfahren basieren auf der Verwendung von sogenannten Farbpaletten, wobei von einer Vielzahl von Farben jeweils unterschiedliche Tönungen bzw. Farbtiefen Verwendung finden und der Betroffene bzw. Proband aus einer Vielzahl von unterschiedlichen Farben jeweils Farbtöne ermitteln soll. Bei diesen Farbauswahlverfahren ergibt sich jedoch aufgrund persönlicher Präferenzen oft, daß für unterschiedliche Farben jeweils konträre, d.h. unterschiedlichen Farbtypen entsprechende Farbtöne ausgewählt werden, so daß ein derartiges Verfahren nicht nur zeitraubend ist, sondern auch oftmals ohne definitive Ergebnisse abgeschlossen werden muß. Weitere bekannte Verfahren zur Feststellung des Hauttyps bzw. Farbtyps, welche beispielsweise durch Auftragen oder Aufbringen von unterschiedlichen Farben auf Hautteile sowie der Reaktion der Haut beruhen, sind ebenfalls sehr zeitraubend und aufwendig.

Derartige Verfahren zur Bestimmung des Farbtyps eines Probanden sind beispielsweise aus der FR-A 1 347 400, der US-PS 4 909 632 oder der EP-A 0 682 236 bekannt, wobei bei diesen bekannten Verfahren jedoch, wie oben angedeutet, jeweils eine Vielzahl von unterschiedlichen Farben eingesetzt wird und dadurch die Auswahl beträchtlich erschwert wird.

Bei sämtlichen bekannten Verfahren dieser Art ist darüberhinaus nachteilig, daß die Beurteilung der passenden bzw. entsprechenden Farben durch eine vom Betroffenen bzw. Probanden unabhängige, dritte Person vorgenommen wird, wobei ganz wesentlichen deren subjektives Farbempfinden, welches naturgemäß entscheidend vom Farbempfinden des Betroffenen abweichen kann, in die Auswertung eingeht und somit eine große Fehlerquelle darstellt.

Die vorliegende Erfindung zielt nun darauf ab, ein Verfahren zur Ermittlung des Farbtyps eines Probanden zur Verfügung zu stellen, welches in einfacher und rascher Weise ein zuverlässiges Ergebnis ermöglicht. Weiters wird darauf abgezielt, das Verfahren derart durchzuführen, daß ohne das Einfließen subjektiver Empfindungen von dritten, von das Verfahren durchführenden Personen eine entsprechende Ermittlung des Farbtyps sicher und korrekt vorgenommen werden kann. Zur Lösung dieser Aufgabe ist das erfindungsgemäße Verfahren zur Ermittlung des Farbtyps eines Probanden im wesentlichen dadurch gekennzeichnet, daß die Bestimmung des Farbtyps des Probanden mehrstufig vorgenommen wird, wobei in jedem Schritt die unterschiedliche Grundfarbanteile enthaltende Mischfarbe in jeweils wenigstens drei Abstufungen oder Farbtönen verwendet wird, welche mit Ausnahme des ersten Verfahrensschrittes, in welchem einen weiten Bereich der Mischfarbe abdeckende Farbtöne verwendet werden, in Abhängigkeit des jeweils vorangehenden Verfahrensschrittes ermittelt werden. Da erfindungsgemäß die Auswahl von Farbtönen durch den Probanden und die nachfolgende, daraus resultierende Ermittlung des Farbtyps des Probanden auf der Basis lediglich einer einzigen Mischfarbe vorgenommen wird, wobei dem Probanden eine Vielzahl von Farbtönen dieser einzigen Mischfarbe zur Auswahl vorgelegt werden, wobei sich die Anteile der in der Mischfarbe enthaltenen Grundfarben entsprechend unterscheiden, kann dem Probanden unmittelbar eine relativ große und breite Palette von unterschiedlichen Farbtönen der verwendeten Mischfarbe vorgelegt werden. Es wurde jedoch festgestellt, daß die Bereitstellung von nur einer relativ geringen Anzahl von unterschiedlichen Farbtönen der eingesetzen Mischfarbe und der entsprechende zeitversetzte Austausch bzw. der nachfolgende Einsatz von alternativen Farbtönen dieser Mischfarbe die erhaltenen Resultate dadurch verbessert, daß das Auge des Probanden nicht durch eine überaus große, gleichzeitig vorliegende Anzahl von Farbtönen der Mischfarbe überfordert bzw. überbeansprucht wird. In Zusammenhang mit einer derartigen Vorlage von jeweils nur einem Teilbereich bzw. einem Auszug aus der zur Verfügung stehenden, breiten Farbpalette der eingesetzten Mischfarbe verwendeten, geringen Anzahl von Farbtönen wird daher erfindungsgemäß vorgeschlagen, die Bestimmung des Farbtyps des Probanden mehrstufig vorzunehmen und in jedem Schritt die unterschiedliche Grundfarbanteile enthaltende Farbe in jeweils wenigstens drei Abstufungen oder Farbtönen einzusetzen, welche in Abhängigkeit des jeweils vorangehenden Verfahrensschrittes ermittelt werden. Bei diesem erfindungsgemäß mehrstufigen Verfahrensablauf kann beispielsweise in einer ersten Stufe eine geringe Anzahl von stark kontrastierenden Farbtönen der eingesetzten Mischfarbe vorgelegt werden, worauf nach vorgenommener Auswahl durch den Probanden auf der Basis des gewählten Farbtones der Mischfarbe eine entsprechende Feinabstufung des im vorangehenden Verfahrensschritt ausgewählten Farbtones der verwendeten Mischfarbe vorgenommen wird. Es kann in relativ wenigen Verfahrensschritten und somit auch in sehr kurzer Zeit der vom Probanden als am angenehmsten empfundene Farbton bzw. die Abstufung ermittelt werden und auf dieser Basis die Bestimmung des Farbtyps vollzogen werden.

Für die Ermittlung des Farbtyps lassen sich prinzipiell eine Vielzahl von Mischfarben einsetzen, welche in einer entsprechend großen Bandbreite bzw. Palette in einer Vielzahl von Farbtönen oder Abstufungen vorliegen, wobei analog zu der eingangs genannten Unterteilung der Hauttypen in Warmtypen und Kalttypen dieser Farbbereich üblicherweise von kühlen bis zu warmen Farbtönen und von hellen bis zu dunklen Farbtönen reicht. Erfindungsgemäß wird nun vorgeschlagen, daß als Mischfarbe Grüntöne verwendet werden, da festgestellt werden konnte, daß bei Verwendung von grünen Farbtönen die Abstrahlung der Gegenfarbe der Haut am stärksten ist und daß über grüne Farbtöne eine falsche Farbauswahl am leichtesten vermieden werden kann.

Diese Feststellung, daß über grüne Farbe die Gegenfarbe der Haut am stärksten abgestrahlt wird, läßt sich auch dafür einsetzen, daß nach vorgenommener Ermittlung des Farbtyps Teilbereiche der Haut des die Bestimmung des Farbtons vernehmenden Probanden mit dem ermittelten Farbton bestrahlt werden und die Übereinstimmung zwischen dem ermittelten Farbtyp und dem Ergebnis der Bestrahlung, beispielsweise durch vergleichende Analyse, überprüft wird, wie dies einer weiteren bevorzugten Ausführungsform des erfindungsgemäßen Verfahrens entspricht. Nach Durchführung der Auswahl des entsprechenden Farbtons durch den Probanden läßt sich derart leicht und einfach eine objektive Überprüfung durchführen, ob der vom Probanden ausgewählte Farbton, welcher die Grundlage der Bestimmung des Farbtyps bildet, mit dem Hauttyp des Probanden übereinstimmt bzw. ob ein entsprechend großes Maß an Übereinstimmung erzielt werden kann. Falls diese Überprüfung eine entsprechend große Übereinstimmung ergibt, läßt sich in weiterer Folge das Verfahren bevorzugt so weiterführen, daß nach beispielsweise automatisiert vorgenommener Ermittlung des Farbtyps der Proband mit den dem Farbtyp entsprechenden Farbtönen von von der verwendeten Mischfarbe unterschiedlichen Farben bestrahlt wird. Derart läßt sich beispielsweise in einfacher Weise bei Bestrahlung von Teilen der Gesichtshaut unmittelbar die Wirkung beim Einsatz von kosmetischen Artikeln der bestimmten Farbtype auch für die unterschiedlichsten Farben der Gesamtheit der Farbpalette ermitteln bzw. überprüfen.

Wie oben bereits ausgeführt, gelingt es somit, durch Vornahme der Auswahl auf der Basis lediglich einer einzigen Mischfarbe in unterschiedlichen Abstufungen oder Farbtönen, wobei diese Auswahl unbeeinflußt von dritten Personen lediglich durch den Probanden selbst vorgenommen wird, den Farbtyp des Probanden festzustellen, wobei nach Feststellung bzw. Ermittlung des Farbtyps nun auch für die anderen Farben des Farbspektrums entsprechende Teilbereiche bzw. Farbtöne automatisch vorgeschlagen werden können. Zu diesem Zweck wird erfindungsgemäß bevorzugt so vorgegangen, daß auf der Basis des ermittelten Farbtyps die dem Farbtyp entsprechenden Farbtöne sämtlicher Farben für unterschiedliche Einsatzbereiche, wie beispielsweise Haarfarbe, Kleidung, Accessoires Kosmetik, etc., bestimmt werden. Erfindungsgemäß lassen sich somit mit einer einfachen und zeitsparenden Feststellung des Farbtyps unter Verwendung einer einzigen Mischfarbe die dem bestimmten Farbtyp entsprechenden Farbtöne sämtlicher Farben für unterschiedlichste Einsatzbereiche zur Verfügung stellen.

Die vorliegende Erfindung bezieht sich auch auf eine Vorrichtung zur Ermittlung des Farbtyps eines Probanden zur Durchführung des Verfahrens, wobei die erfindungsgemäße Vorrichtung im wesentlichen gekennzeichnet ist durch eine Einrichtung zum Bereitstellen bzw. Erzeugen verschiedener Farbtöne einer Mischfarbe mit unterschiedlichen Anteilen von Grundfarben und eine Einrichtung zum Eingeben und Auswerten der vorgenommenen Auswahl des gewünschten Farbtons. Eine derartige erfindungsgemäße Einrichtung zum Bereitstellen bzw. Erzeugen verschiedener Farbtöne einer Mischfarbe mit unterschiedlichen Anteilen an Grundfarben kann beispielsweise von einer Einrichtung gebildet sein, in welcher die unterschiedlichen Farbtöne der Mischfarben in Form von unterschiedlich gefärbten Folien oder dgl. zur Verfügung gestellt werden. Alternativ kann bei entsprechender Farbauflösung ein Bildschirm Verwendung finden, auf welchem sich die unterschiedlichen Farbtöne entsprechend genau und unterscheidend darstellen lassen. Bei Kopplung mit einer Einrichtung zum Eingeben und Auswerten der vorgenommenen Auswahl kann somit jeweils eine geringe Anzahl von Farben dem Probanden zur Betrachtung zur Verfügung gestellt werden, worauf nach Auswahl eines Farbtons eine entsprechende weiterführende Auswahl unterschiedlicher Farbtöne zur Verfügung gestellt wird. In diesem Zusammenhang wird weiters vorgeschlagen, daß die Einrichtung zum Erzeugen der Farbtöne mit einer Steuer- bzw. Rechnervorrichtung gekoppelt ist, welche nach einer ersten vorgegebenen Farbauswahl in Abhängigkeit eines ausgewählten Farbtons eine weitere Abfrage für die Feinabstimmung vornimmt, wie dies einer bevorzugten Ansführungsform der erfindungsgemäßen Ausführungsform entspricht. Mit einer derartigen Steuer- bzw. Rechnervorrichtung läßt sich nach einem ersten, zur Verfügung stehenden Bereich der Mischfarbe, beispielsweise grün, jeweils auf der Basis der vorgenommenen Auswahl eine entsprechend feinere Unterteilung für eine Feinabstimmung durchführen.

Um nach vorgenommener Auswahl des Farbtons und Bestimmung des Farbtyps auf der Basis der vom Probanden vorgenommenen Ausbildung eine Überprüfung bzw. Veranschaulichung des Ergebnisses zu ermöglichen, wird darüberhinaus bevorzugt vorgeschlagen, daß weiters eine Einrichtung zum Erzeugen des bestimmten Farbtons zum Bestrahlen von Teilbereichen der Haut des Probanden und zum Überprüfen der Übereinstimmung zwischen dem ermittelten Farbtyp und dem Ergebnis der Bestrahlung vorgesehen ist. Eine derartige Einrichtung kann in einfacher Weise von einer mit entsprechenden Filtern kombinierten Lampe gebildet sein, wobei die Überprüfung der Übereinstimmung des ermittelten Farbtyps mit dem Ergebnis der Bestrahlung durch entsprechende Aufnahmegeräte und Sensoren und gegebenenfalls Spiegel realisierbar ist. Die Bestrahlung kann hiebei nicht nur in dem ausgewählten Grünton erfolgen, um, wie oben bereits ausgeführt, die entsprechend starke Reaktion der Abstrahlung der Gegenfarbe durch die Haut zu erhalten, sondern auch mit den dem bestimmten Farbtyp entsprechenden Farbtönen anderer Farben, um unmittelbar die Wirkung von anderen Farben des festgestellten Farbtyps überprüfen und veranschaulichen zu können. In diesem Zusammenhang wird darüberhinaus vorgeschlagen, daß eine Auswahleinrichtung vorgesehen ist, welche in Abhängigkeit von dem ermittelten Farbtyp die entsprechenden Farbtöne von von der verwendeten Mischfarbe unterschiedlichen Farben für unterschiedliche Einsatzbereiche, wie beispielsweise Haarfarbe, Kleidung, Kosmetik, etc., errechnet und ausgibt, wie dies einer weiteren bevorzugten Ausführungsform der erfindungsgemäßen Vorrichtung entspricht.

Die Erfindung wird nachfolgend anhand eines in der beigeschlossenen Zeichnung näher dargestellten Ausführungsbeispieles der erfindungsgemäßen Vorrichtung zur Durchführung des erfindungsgemäßen Verfahrens näher beschrieben.

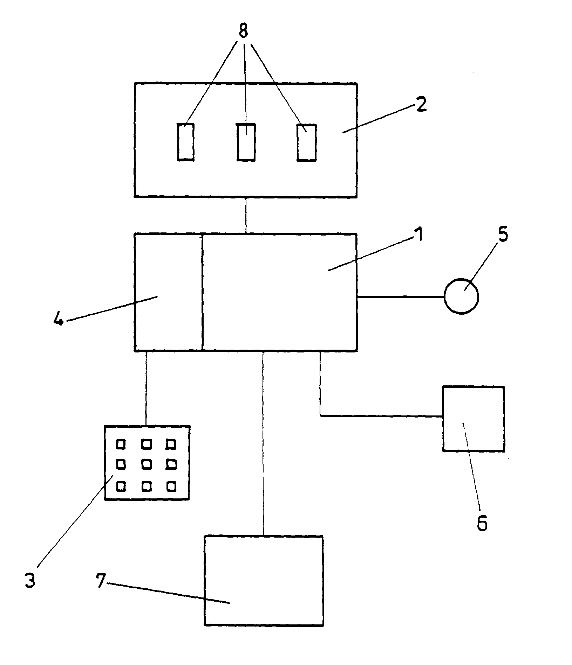

In der Zeichnung ist schematisch ein Blockdiagramm einer Vorrichtung zur Ermittlung des Farbtyps eines Probanden dargestellt. Hiebei ist mit 1 eine Einrichtung zur Erzeugung von unterschiedlichen Farbtönen einer einzigen Mischfarbe, beispielsweise grün, bezeichnet, wobei auf einem Bildschirm 2 jeweils eine geringe Anzahl von unterschiedliche Anteile von Grundfarben enthaltenden Farbtönen 8 dargestellt ist. Bei der gezeigten Ausführungsform sind beispielsweise drei Farbtöne bzw. Abstufungen 8 der eingesetzten Mischfarbe dargestellt und es erfolgt nach Darstellung einer ersten, einen weiten Bereich einer Mischfarbe überdeckenden Auswahl an einer Auswahleinrichtung bzw. Tastatur 3 eine Auswahl eines vom Probanden als am angenehmsten empfundenen Farbtones. Auf der Basis dieser ersten Auswahl erfolgt unter Einsatz einer schematisch angedeuteten Steuer- bzw. Rechnereinrichtung 4 in der Einrichtung 1 die Erzeugung weiterer, einen engeren Teilbereich um die im ersten Verfahrensschritt vorgenommene Auswahl abdeckenden Farbtöne 8, so daß durch eine derartige Schrittfolge in sehr wenigen Schritten eine entsprechende Feinabstimmung und endgültige Auswahl eines Farbtons der einzigen eingesetzten Mischfarbe durch den Probanden vorgenommen wird.

Nach erfolgter Auswahl eines Farbtons 8 und darauf basierend einer Bestimmung des Farbtyps des Probanden durch die Steuer- bzw. Rechnereinrichtung 4 werden Teilbereiche der Haut des Probanden, beispielsweise Teilbereiche seines Gesichts, von einer Strahlungsquelle 5 mit dem vom Probanden ausgewählten Farbton bestrahlt und es wird mit einem schematisch angedeuteten Sensor bzw. einer entsprechenden Aufnahmeeinheit 6 eine Überprüfung und Feststellung mittels der in der Steuer- und Rechnereinrichtung 4 gespeicherten Daten vorgenommen, ob die vom Probanden vorgenommene Auswahl und darauf basierend die Bestimmung des Farbtyps mit dem objektiv feststellbaren Hauttyp des Probanden übereinstimmt bzw. eine entsprechend große Überdeckung aufweist. Gleichzeitig kann von dem Probanden eine subjektive Betrachtung des mit dem gewählten Farbton bestrahlten Gesichts vorgenommen werden, um gegebenenfalls auch über den ermittelten Farbtyp hinausgehende, unmittelbar benachbarte Farbtypen abfragen bzw. überprüfen zu können.

Für den Fall, daß diese Bestrahlung von Teilbereichen der Haut des Probanden und die nachfolgende Analyse und Überprüfung ergibt, daß die vom Probanden ausgewählte Farbe bzw. der ausgewählte Farbton 8 große Diskrepanzen zu dem bei der Bestrahlung feststellbaren Hauttyp bzw. allgemein Farbtyp des Probanden erkennen läßt, kann über die Steuer- bzw. Rechnereinrichtung 4 das Auswahlverfahren nochmals gestartet werden, wobei in Abhängigkeit von der Überprüfung des Hauttyps dem Probanden lediglich eine eingeschränkte Auswahl von Farbnuancen zur Verfügung gestellt wird, so daß aufgrund der von der Einrichtung 1 bzw. 4 vorgenommenen Auswahl mit einer noch geringeren Anzahl von Verfahrensschritten nunmehr ein korrektes Ergebnis zu erwarten ist.

Neben einer Bestrahlung mit dem dem Farbtyp entsprechenden Farbton der Mischfarbe kann bei Vorsehen von geeigneten Bestrahlungseinrichtungen 5, beispielsweise durch Verwendung entsprechender Filter, darüberhinaus auch eine Bestrahlung mit dem Farbtyp des Probanden entsprechenden Farbtönen anderer Farben vorgenommen werden, um unmittelbar durch Betrachtung in einem Spiegel den Effekt und Einfluß auch von anderen Farben anschaulich zu machen.

Weiters ist mit 7 eine Auswahl- und Ausgabeeinrichtung angedeutet, mit welcher in Abhängigkeit von dem ermittelten Farbtyp die entsprechenden Farbtöne sämtlicher Farben für unterschiedliche Einsatzbereiche, wie beispielsweise Haarfarbe, Kleidung, Accessoires, Kosmetik, Innenarchitektur oder dgl., ausgegeben werden können.

## Patentansprüche

1. Verfahren zur Ermittlung des Farbtyps eines Probanden, wobei auf der Basis einer Mischfarbe anhand der Menge der darin enthaltenen Anteile von Grundfarben eine Auswahl vorgenommen und der Farbtyp des Probanden ermittelt wird, dadurch gekennzeichnet, daß die Bestimmung des Farbtyps des Probanden mehrstufig vorgenommen wird, wobei in jedem Schritt die unterschiedliche Grundfarbanteile enthaltende Mischfarbe in jeweils wenigstens drei Abstufungen oder Farbtönen (8) verwendet wird, welche mit Ausnahme des ersten Verfahrensschrittes, in welchem einen weiten Bereich der Mischfarbe abdeckende Farbtöne verwendet werden, in Abhängigkeit des jeweils vorangehenden Verfahrensschrittes ermittelt werden.

2. Verfahren nach Anspruch 1, dadurch gekennzeichnet, daß als Mischfarbe Grüntöne verwendet werden.

3. Verfahren nach Anspruch 1 oder 2, dadurch gekennzeichnet, daß nach vorgenommener Ermittlung des Farbtyps Teilbereiche der Haut des die Bestimmung des Farbtons (8) vornehmenden Probanden mit dem ermittelten Farbton bestrahlt werden.

4. Verfahren nach Anspruch 3, dadurch gekennzeichnet, daß nach Ermittlung des Farbtyps der Proband mit den dem Farbtyp entsprechenden Farbtönen (8) von von der verwendeten Mischfarbe unterschiedlichen Farben bestrahlt wird.

5. Verfahren nach einem der Ansprüche 1 bis 4, dadurch gekennzeichnet, daß auf der Basis des ermittelten Farbtyps die dem Farbtyp entsprechenden Farbtöne (8) sämtlicher Farben für unterschiedliche Einsatzbereiche, vorzugsweise Haarfarbe, Kleidung, Kosmetik, bestimmt werden.

6. Vorrichtung zur Ermittlung des Farbtyps eines Probanden zur Durchführung des Verfahrens nach einem der Ansprüche 1 bis 5, gekennzeichnet durch eine Einrichtung (1) zum Bereitstellen bzw. Erzeugen verschiedener Farbtöne (8) einer Mischfarbe mit unterschiedlichen Anteilen von Grundfarben und eine Einrichtung (3) zum Eingeben und Auswerten der vorgenommenen Auswahl des gewünschten Farbtons.

7. Vorrichtung nach Anspruch 6, dadurch gekennzeichnet, daß die Einrichtung (1) zum Erzeugen der Farbtöne (8) mit einer Steuer- bzw. Rechnervorrichtung (4) gekoppelt ist, welche nach einer ersten vorgegebenen Farbauswahl in Abhängigkeit eines ausgewählten Farbtons (8) eine weitere Abfrage für die Feinabstimmung vornimmt.

8. Vorrichtung nach Anspruch 6 oder 7, dadurch gekennzeichnet, daß weiters eine Einrichtung (4, 5, 6) zum Erzeugen des bestimmten Farbtons (8) zum Bestrahlen von Teilbereichen der Haut des Probanden vorgesehen ist.

9. Vorrichung nach Anspruch 6, 7 oder 8, dadurch gekennzeichnet, daß eine Auswahleinrichtung (7) vorgesehen ist, welche in Abhängigkeit von dem ermittelten Farbtyp die entsprechenden Farbtöne von von der verwendeten Mischfarbe unterschiedlichen Farben für unterschiedliche Einsatzbereiche, vorzugsweise Haarfarbe, Kleidung, Kosmetik, errechnet und ausgibt.

## Claims

1. A method for determining the color type of a test subject by making a selection on the basis of a mixed color by way of the amount of primary color portions contained therein and determining the color type of the test subject, characterized in that the determination of the color type of the test subject is effected in several steps using in each step the mixed color containing different primary color portions, each in at least three graduations or color tones (8) determined as a function of the respectively preceding method step with the exception of the first method step, in which color tones covering a wide range of the mixed color are employed.

2. A method according to claim 1, characterized in that green tones are used as the mixed color.

3. A method according to claim 1 or 2, characterized in that after having determined the color type, partial regions of the skin of the test subject undertaking the determination of the color tone (8) are irradiated with the color tone determined.

4. A method according to claim 3, characterized in that the test subject after the determination of the color type is irradiated with the color tones (8) corresponding to the color type of colors differing from the mixed color employed.

5. A method according to any of the claims 1 to 4, characterized in that on the basis of the color type determined, the color tones (8) corresponding to the color type, of all colors are assessed for different applications such as, for instance, hair color, clothing, cosmetics.

6. An arrangement for determining the color type of a test subject for carrying out the method according to any of the claims 1 to 5, characterized in that a device (1) for providing or producing different color tones (8) of a mixed color having different portions of primary colors and a device (3) for inputting and evaluating the selection made of the desired color tone.

7. An arrangement according to claim 6, characterized in that the device (1) for producing color tones (8) is coupled with a control or computation means (4) which, after a first given color selection, effects further interrogation as a function of a selected color tone (8) with a view to fine tuning.

8. An arrangement according to claim 6 or 7, characterized in that a device (4, 5, 6) for producing the predetermined color tone (8) is additionally provided for irradiating partial regions of the skin of the test subject.

9. An arrangement according to claim 6, 7 or 8, characterized in that a selection device (7) is provided, which, as a function of the color type determined, calculates and outputs the respective color tones of colors differing from the mixed color employed, with a view to different applications, preferably hair color, clothing, cosmetics.

## Revendications

1. Procédé de détermination du type de couleur d'une personne se prêtant à des tests, une sélection étant faite sur la base d'une couleur mélangée en fonction de la quantité des composantes de couleurs primaires qui y sont contenues, le type de la couleur de la personne concernée étant déterminé, caractérisé en ce que la détermination du type de couleur de la personne se prêtant à des tests est effectuée en plusieurs étapes, la couleur de mélange contenant les différentes composantes de couleur primaires étant utilisées dans chaque étape dans au moins trois gradations ou nuances de couleur (8), déterminées, à l'exception de la première étape du procédé, dans laquelle on utilise des nuances de couleur couvrant une vaste plage de la couleur de mélange, en fonction de l'étape précédente respective du procédé.

2. Procédé selon la revendication 1, caractérisé en ce que l'on utilise des nuances de vert comme couleur de mélange.

3. Procédé selon les revendications 1 ou 2, caractérisé en ce qu'après la détermination du type de couleur, des sections partielles de la peau de la personne se prêtant à la détermination de la nuance de couleur (8) sont irradiées avec la nuance de couleur déterminée.

4. Procédé selon la revendication 3, caractérisé en ce qu'après la détermination du type de couleur, la personne concernée est irradiée avec des nuances de couleur (8) correspondant au type de couleur, différentes des couleurs de la couleur de mélange utilisée.

5. Procédé selon l'une des revendications 1 à 4, caractérisé en ce que les nuances de couleur (8) correspondant au type de couleur de toutes les couleurs sont déterminées sur la base du type de couleur déterminé pour différents secteur d'utilisation, de préférence la couleur des cheveux, des vêtements et des produits de maquillage.

6. Système de détermination du type de couleur d'une personne se prêtant à des tests, permettant l'exécution du procédé selon les revendications 1 à 5, caractérisé par un dispositif (1) destiné à préparer et à produire différentes nuances de couleur (8) d'une couleur de mélange avec différentes composantes de couleurs primaires et un dispositif (3) servant à entrer les données et à évaluer la sélection effectuée de la nuance de couleur voulue.

7. Système selon la revendication 6, caractérisé en ce que le dispositif (1) destiné à produire les nuances de couleur (8) est couplé à un dispositif de commande ou de calculateur (4), effectuant, après une première sélection prédéterminée de la couleur, une nouvelle interrogation en vue de l'adaptation de précision, en fonction d'une nuance de couleur (8) sélectionnée.

8. Système selon les revendications 6 ou 7, caractérisé en ce qu'il comporte un dispositif supplémentaire (4, 5, 6) destiné à produire la nuance de couleur (8) déterminée en vue de l'irradiation de sections partielles de la peau de la personne se prêtant au test.

9. Système selon les revendications 6, 7 ou 8, caractérisé en ce qu'il comporte un dispositif de sélection (7) calculant et sortant les nuances de couleur correspondantes de couleurs différentes de celles utilisées dans la couleur de mélange utilisée, en fonction du type de couleur déterminé, pour différents secteurs d'utilisation, de préférence pour la couleur des cheveux, des vêtements et des produits de maquillage.
